(19) Europäisches Patentamt
European Patent Office
Office européen des brevets

(11) **EP 3 126 681 B1**

(12) **EUROPÄISCHE PATENTSCHRIFT**

(45) Veröffentlichungstag und Bekanntmachung des Hinweises auf die Patenterteilung:
**12.05.2021 Patentblatt 2021/19**

(21) Anmeldenummer: **15714459.3**

(22) Anmeldetag: **31.03.2015**

(51) Int Cl.:
*F16B 5/02* (2006.01)    *F16B 37/00* (2006.01)
*B23B 51/00* (2006.01)

(86) Internationale Anmeldenummer:
**PCT/EP2015/056978**

(87) Internationale Veröffentlichungsnummer:
**WO 2015/150361 (08.10.2015 Gazette 2015/40)**

(54) **BEFESTIGUNGSVERFAHREN**

FIXING METHOD

PROCÉDÉ DE FIXATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2014 EP 14163294**

(43) Veröffentlichungstag der Anmeldung:
**08.02.2017 Patentblatt 2017/06**

(73) Patentinhaber: **Hilti Aktiengesellschaft**
**9494 Schaan (LI)**

(72) Erfinder: **FOSER, Thomas**
**FL-9496 Balzers (LI)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
**EP-A2- 1 163 982       DE-A1- 19 842 173**
**DE-A1-102011 087 683   DE-U1- 29 721 963**
**DE-U1-202008 000 368   US-A- 6 062 263**

# Beschreibung

Die vorliegende Erfindung betrifft ein Verfahren zur Befestigung eines Bauelements an einem Basiselement, bei dem in dem Basiselement ein Sackloch erzeugt wird, ein Befestigungselement in dem Sackloch verankert wird, und das Bauelement von dem Befestigungselement gehalten wird.

Sacklöcher werden üblicherweise mit Bohrern erzeugt, welche an ihren Spitzen mit Schneidkanten bestückt sind. Die Schneidkanten sind gegenüber einer Tiefenrichtung des jeweiligen Sacklochs geneigt angeordnet und bewirken durch Drehung um die Tiefenrichtung einen kegelförmigen Sacklochgrund. Ein Rand des Sacklochs weist zumeist eine Fase auf, so dass sich zwischen der Fase und dem Sacklochgrund eine sich in der Tiefenrichtung erstreckende Kraftübertragungsfläche ausbildet, in die beispielsweise ein selbstschneidendes Gewinde des Befestigungselements ein Gegengewinde einschneidet. Der Sacklochgrund und die Fase tragen üblicherweise nicht zu einer Kraftübertragung zwischen dem Befestigungselement und dem Basiselement bei.

Um möglichst grosse Haltekräfte zu erreichen, wird üblicherweise ausreichend tief gebohrt und ein entsprechend langes Befestigungselement verwendet. Bei plattenförmigen Basiselementen mit vorgegebener Dicke, die darüber hinaus nicht durchbohrt werden sollen, ist die Tiefe des Sacklochs und damit die für eine Verankerung in dem Sackloch wirksame Länge des Befestigungselements beschränkt.

DE 198 42 173 A1 beschreibt ein Befestigungselement mit selbstfurchender Schraubverbindung, welches als Koppelglied zwischen einem Beschleunigungsaufnehmer und einem Maschinengehäuse verwendet wird. Das Befestigungselement ist mit rein kraftschlüssigen Oberflächenbereichen versehen, mit welchen eine mechanische Verbindung zu einem zylinderförmigen oder leicht konischen Sackloch bewirkt wird.

Die Aufgabe der vorliegenden Erfindung besteht darin, ein Befestigungsverfahren anzugeben, bei dem bei gegebener Sacklochtiefe eine grosse Haltekraft des Befestigungselements in dem Sackloch gewährleistet ist.

Die Aufgabe wird gelöst durch ein Verfahren zur Befestigung eines Bauelements an einem Basiselement, bei dem in dem Basiselement ein eine Tiefenrichtung definierendes Sackloch mit einer Kraftübertragungsfläche des Flächeninhalts A erzeugt wird, welches in der Tiefenrichtung eine Tiefe T kleiner als 10 mm aufweist, wobei die Kraftübertragungsfläche kegelstumpfförmig mit einem halben Kegelöffnungswinkel β von 0° bis 20° und einem mittleren Durchmesser d ist, wobei das Sackloch einen kegelförmigen Sacklochgrund mit einem Kegelöffnungswinkel α von 88° bis 138° oder von 141° und an seinem Rand eine sich in Tiefenrichtung bis zu einer Fasentiefe L von 0 mm bis 2 mm erstreckende Fase aufweist, wobei der mittlere Durchmesser d der Kraftübertragungsfläche A mindestens

$$d = \left(1 - \sqrt{k}\right)(T - L)\tan\frac{\alpha}{2}$$

und höchstens

$$d = \left(1 + \sqrt{k}\right)(T - L)\tan\frac{\alpha}{2}$$

mit einer maximalen Flächentoleranz k von 0,3 beträgt, wobei bei dem Verfahren ein Befestigungselement über die Kraftübertragungsfläche in dem Sackloch verankert wird, und wobei das Bauelement von dem Befestigungselement gehalten wird.

Das Basiselement besteht dabei bevorzugt aus einem Metall oder einer Legierung. Die Tiefe T des Sacklochs ist vorzugsweise nur etwas kleiner als eine Dicke des insbesondere platten- oder scheibenförmigen Basiselements. Die Tiefe T ist bevorzugt kleiner als 8 mm, besonders bevorzugt kleiner als 6 mm, beispielsweise kleiner als 4 mm. Die Fasentiefe L der Fase beträgt bevorzugt 0 mm bis 0,5 mm, besonders bevorzugt 0 mm bis 0,2 mm, beispielsweise 0,1 mm, wobei eine Fasentiefe von 0 mm bedeutet, dass die Fase nur im mikroskopischen Massstab vorhanden ist.

Der halbe Kegelöffnungswinkel eines Kegels beziehungsweise eines Kegelstumpfs im Sinne der Erfindung ist der Winkel zwischen der Mantellinie und der in Tiefenrichtung des Sacklochs weisenden Achse des jeweiligen Kegels. Der Kegelöffnungswinkel ist das Doppelte davon. Bevorzugt öffnet sich der Kegelöffnungswinkel sowohl für die Kraftübertragungsfläche als auch für den Sacklochgrund von dem Sacklochgrund zu dem Rand des Sacklochs hin. Der mittlere Durchmesser d der Kraftübertragungsfläche ist das arithmetische Mittel des Durchmessers an den beiden stirnseitigen Enden des Kegelstumpfs. Bei einem halben Kegelöffnungswinkel β von 0° ist die Form der Kraftübertragungsfläche ein kreisrunder Zylinder als Spezialfall des Kegelstumpfs. Der Kegelöffnungswinkel α des Sacklochgrunds beträgt bevorzugt zwischen 98° und 138°, beispielsweise 118°.

Die Flächentoleranz k ist der Anteil an der maximal möglichen Kraftübertragungsfläche, der als Flächenverlust noch toleriert wird. Der Wert k = 0,3 bedeutet, dass die Kraftübertragungsfläche höchstens 30% weniger als die maximal mögliche Kraftübertragungsfläche beträgt. Bevorzugt ist k = 0,2, besonders bevorzugt ist k = 0,1. Bei k = 0 wird mit dem angegebenen Wert für den mittleren Durchmesser d die maximal mögliche Kraftübertragungsfläche erreicht.

Das Halten des Bauelements wird bevorzugt bereits durch die Verankerung des Befestigungselements in dem Sackloch bewerkstelligt. Gemäss einer bevorzugten Ausgestaltung umfasst daher das Befestigungselement einen Kopf, mittels dessen das Bauelement an dem Basiselement gehalten wird. Ebenfalls bevorzugt wird das Bauelement erst nach der Verankerung an dem Befestigungselement befestigt. Gemäss einer bevorzugten Ausgestaltung umfasst daher das Befestigungselement ein weiteres Lastangriffsmittel, mittels dessen das Bauelement an dem Befestigungselement befestigt wird. Besonders bevorzugt weist der Schaft das weitere Lastangriffsmittel auf.

Eine bevorzugte Ausführungsform ist dadurch gekennzeichnet, dass das Sackloch aus dem Sacklochgrund, der Kraftübertragungsfläche und der Fase besteht. Die Verankerung des Befestigungselements in dem Sackloch geschieht vorzugsweise nur über die Kraftübertragungsfläche, darüber hinaus bevorzugt formschlüssig, reibschlüssig und/oder stoffschlüssig.

Eine bevorzugte Ausführungsform ist dadurch gekennzeichnet, dass das Befestigungselement einen Schaft mit einer Gegenkraftübertragungsfläche aufweist, wobei die Gegenkraftübertragungsfläche mit der Kraftübertragungsfläche wechselwirkt, um das Befestigungselement in dem Sackloch zu verankern. Besonders bevorzugt weist das Befestigungselement ein beispielsweise selbstschneidendes Aussengewinde auf. Eine bevorzugte Ausführungsform ist dadurch gekennzeichnet, dass die Kraftübertragungsfläche ein Innengewinde aufweist. Besonders bevorzugt ist das Innengewinde zu dem Aussengewinde des Befestigungselements komplementär.

Eine bevorzugte Ausführungsform ist dadurch gekennzeichnet, dass das Befestigungselement in das Sackloch gepresst, geklebt, geschweisst, gelötet und/oder geschraubt wird. Das Befestigungselement besteht vorzugsweise aus Metall, einer Legierung oder einem Kunststoff und ist bevorzugt als Schraube, Nagel, Niet, Stift oder Bolzen, besonders bevorzugt als Gewindebolzen ausgebildet.

Eine bevorzugte Ausführungsform ist dadurch gekennzeichnet, dass ein Fasenwinkel zwischen der Fase und der Tiefenrichtung zwischen 30° und 60° beträgt. Besonders bevorzugt beträgt der Fasenwinkel zwischen 40° und 50°, beispielsweise 45°. Eine weitere bevorzugte Ausführungsform ist dadurch gekennzeichnet, dass ein Eintreibwinkel zwischen einer Oberfläche des Basiselements und der Tiefenrichtung mindestens 80° beträgt. Besonders bevorzugt beträgt der Eintreibwinkel mindestens 85°, beispielsweise 90°.

Gemäss einer bevorzugten Ausgestaltung wird das Sackloch in das Basiselement gebohrt. Besonders bevorzugt wird hierfür eine insbesondere elektrisch betriebene Bohrmaschine verwendet. Ebenfalls bevorzugt wird die Tiefe T mit Hilfe eines Anschlagbohrers vorbestimmt, welcher einen besonders bevorzugt als Schulter ausgebildeten Bohreranschlag aufweist. Der Bohrer wird so lange in das Bauelement und/oder das Basiselement eingetrieben, bis der Bohreranschlag an einer Oberfläche des Bauelements beziehungsweise Basiselements anliegt. Die Tiefe des dann als Bohrloch ausgebildeten Sacklochs ist dann so gross wie der Abstand des Bohreranschlags zur Bohrspitze des Anschlagbohrers. Gemäss einer alternativen Ausgestaltung wird die Tiefe T mit Hilfe eines Tiefenanschlags einer Bohrmaschine vorbestimmt.

Gemäss einer Ausführungsform ist der mittlere Durchmesser kleiner oder gleich 8 mm, bevorzugt kleiner oder gleich 7 mm, besonders bevorzugt kleiner oder gleich 6 mm. Dadurch ist das Sackloch unter Umständen mit relativ geringem zeitlichen Aufwand mit einer handgehaltenen Bohrmaschine erzeugbar.

Gemäss einer bevorzugten Ausführungsform ist der mittlere Durchmesser d grösser oder gleich der Tiefe T, bevorzugt grösser als die Tiefe T.

Die Erfindung wird nachstehend anhand von Ausführungsbeispielen unter Bezugnahme auf die Zeichnungen näher erläutert. Es zeigen:

Fig. 1 ein an einem Basiselement befestigtes Befestigungselement und

Fig. 2 eine Auftragung des Flächeninhalts der Kraftübertragungsfläche über deren mittleren Durchmesser für verschiedene Sacklochtiefen.

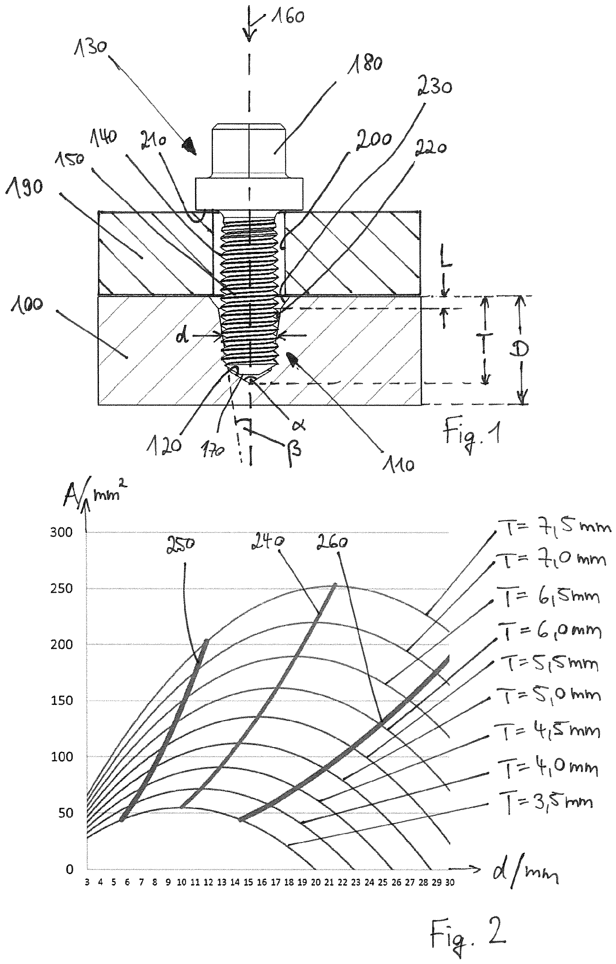

In Fig. 1 ist eine Platte 100 dargestellt, welche im Rahmen der Erfindung ein Basiselement darstellt. Vorzugsweise umfasst oder besteht die Platte 100 aus Metall, insbesondere Aluminium, oder einer Legierung, insbesondere Stahl, oder Beton, insbesondere Porenbeton, oder Kunststoff oder Holz, und bildet bevorzugt eine Wand oder einen Boden beispielsweise eines Schiffes, einer Bohrinsel oder eines Industriegebäudes. Zur Befestigung eines Bauelements 190 an der Platte 100 ist in das Bauelement 190 ein Durchgangsloch 200 und in die Platte 100 ein Sackloch 110 gebohrt, das eine Tiefenrichtung 160 definiert und bei einer Tiefe T einen Sacklochgrund 120 aufweist. Das Durchgangsloch 200 und das Sackloch 110 werden vorzugsweise nacheinander gebohrt. Bei nicht dargestellten Ausführungsbeispielen werden das Durchgangsloch und das Sackloch in einem einzigen Bohrvorgang erzeugt, beispielsweise indem durch das Bauelement hindurch in das Basiselement hineingebohrt wird.

Der Sacklochgrund 120 ist kegelförmig mit einem Kegelöffnungswinkel α. An den Sacklochgrund schliesst sich entgegen der Tiefenrichtung 160 eine Kraftübertragungsfläche 220, welche einen Flächeninhalt A sowie einen mittleren Durchmesser d aufweist, an. Die Kraftübertragungsfläche 220 ist kegelstumpfförmig mit einem halben Kegelöffnungswinkel β. An die Kraftübertragungsfläche schliesst sich entgegen der Tiefenrichtung 160 eine Fase 230 an, welche sich von einem Rand des Sacklochs 110 in Tiefenrichtung 160 bis zu einer Fasentiefe L erstreckt und einen Fasenwinkel von beispielsweise 45° aufweist.

In das Sackloch 110 ist ein als Schraube 130 ausgebildetes Befestigungselement mit einem Schaft 150, welcher ein als insbesondere selbstschneidendes Gewinde 140 ausgebildetes Gegenkraftübertragungsmittel für eine Kraftübertragung auf die Kraftübertragungsfläche 220 trägt, in der Tiefenrichtung 160 eingeschraubt. Das Gewinde 140 erstreckt sich dabei von einer Stirnseite 170 des Schafts 150 über eine Länge entgegen der Tiefenrichtung 160, welche grösser als die die Tiefe T des Sacklochs 110 ist. Bei nicht gezeigten Ausführungsbeispielen ist die Befestigungsvorrichtung als Setz- oder Spreizbolzen ausgebildet, wobei dann das Gegenkraftübertragungsmittel durch eine glatte oder aufgeraute Umfangsfläche des Schafts gebildet ist. Das Gewinde 140 und bevorzugt der Schaft 150 sind zylindrisch mit einem Durchmesser, der im Wesentlichen gleich dem mittleren Durchmesser d ist, ausgebildet. Bei nicht dargestellten Ausführungsbeispielen ist das Gewinde und/oder der Schaft kegelstumpfförmig, bevorzugt mit einem halben Öffnungswinkel, der gleich dem halben Öffnungswinkel β ist, ausgebildet.

Vorliegend betragen D = 8 mm, T = 7,7 mm, β = 9°, α = 118°, L = 1 mm und d = 8 mm. Bei nicht dargestellten Ausführungsbeispielen betragen die Parameterwerte dagegen D = 6 mm, T = 5,7 mm, β = 0°, α = 118°, L = 0 mm und d = 6 mm, beziehungsweise D = 4 mm, T = 3,7 mm, β = 0°, α = 118°, L = 0 mm und d = 5 mm.

Um die vollständige Tiefe T des Sacklochs 110 für eine Kraftübertragung des Gewindes 140 möglichst effektiv nutzbar zu machen, wird einerseits die Tiefe T gezielt vorbestimmt, indem das Sackloch 110 beispielsweise mit einem Anschlagbohrer oder mittels einer kraftbetriebenen Bohrmaschine mit Tiefenanschlag gebohrt wird. Die Tiefe T unterschreitet eine Dicke D des Basiselements 100 nur wenig, bevorzugt weniger als 0,5 mm, besonders bevorzugt weniger als 0,2 mm, beispielsweise 0,1 mm. Andererseits ist bei der Auswahl der Schraube 130 darauf zu achten, dass die Länge des Gewindes mindestens so gross ist wie die Tiefe T.

Die Schraube 130 weist einen Kopf 180 auf, welcher sich an den Schaft 150 entgegen der Tiefenrichtung 160 anschliesst, und dessen in Tiefenrichtung weisende Unterseite ein Widerlager 210 zum Andrücken des Bauelements 190 an die Platte 100 bildet. Das Widerlager 210 weist gegenüber einer Stirnseite 170 des Schaftes 150 entlang der Tiefenrichtung 160 einen axialen Abstand L auf, entlang welchem sich das Gewinde 140 erstreckt. Das Bauelement 190 ist zwischen dem Widerlager 210 und der Platte 100 als Anbauteil festgeklemmt und somit an der Platte 100 befestigt. Der Schaft 150 der Schraube 130 wird dabei vorzugsweise so weit in das Sackloch 110 einschraubt, bis die Stirnseite 170 an dem Sacklochgrund 120 anliegt oder fast anliegt. Dies ist besonders dann vorteilhaft, wenn das Basiselement in Tiefenrichtung nur eine geringe Dicke hat, so dass die verfügbare Tiefe des Sacklochs begrenzt ist.

Der Kopf 180 weist einen beispielsweise als Aussensechskant ausgebildeten Aussenantrieb auf, mittels dessen die Schraube 130 in das Sackloch 110 eingetrieben wird, insbesondere mit einem bevorzugt kraftbetriebenen Schraubgerät, beispielsweise einem Akkuschrauber. Bei nicht dargestellten Ausführungsbeispielen weist der Kopf einen beispielsweise als geraden Schlitz, Kreuzschlitz, Sechsrund, Innensechskant oder Innenvierkant ausgebildeten Innenantrieb auf. Bei weiteren nicht dargestellten Ausführungsbeispielen wird das Bauelement an der Schraube und damit an der Platte befestigt, indem bevorzugt eine Öse, ein Haken oder eine Schlaufe des Bauelements über den Kopf der Schraube gelegt oder eingehängt wird.

Bei nicht dargestellten Ausführungsbeispielen weist das Befestigungselement ein weiteres Lastangriffsmittel zur Befestigung des Bauelements an dem Basiselement auf, welches zusätzlich oder alternativ zu dem Kopf am Kopf oder Schaft angeordnet ist und sich insbesondere entgegen der Tiefenrichtung erstreckt. Das Befestigungselement ist beispielsweise als Schraubbolzen mit einem insbesondere genormten, beispielsweise metrischen oder zöllischen Gewinde als weiterem Lastangriffsmittel ausgebildet, so dass das Bauelement insbesondere mittels einer Schraubenmutter an das Befestigungselement geschraubt und damit an dem Basiselement befestigt wird. Bei weiteren nicht dargestellten Ausführungsbeispielen weist die Schraube ein den Schaft umschliessendes Zwischenelement auf, welches seinerseits ein Dichtelement, vorzugsweise ein Elastomerelement, und/oder ein Abdeckelement umfasst. Eine in Tiefenrichtung weisende Unterseite des Kopfes bildet vorzugsweise ein Widerlager zum Andrücken des Zwischenelements an das Basiselement. Das Zwischenelement wird dann zwischen dem Widerlager und dem Basiselement festgeklemmt.

In Fig. 2 ist der Flächeninhalt A der Kraftübertragungsfläche in mm² über deren mittlerem Durchmesser d in mm für verschiedene Sacklochtiefen T beispielhaft aufgetragen. Der Kegelöffnungswinkel α beträgt für alle dargestellten Kurven 141°, die Fasentiefe L beträgt jeweils 0 mm. Es ist deutlich erkennbar, dass der Flächeninhalt A für jede Sacklochtiefe T ein ausgeprägtes Maximum besitzt, wobei die Maxima auf einer Kurve 240 liegen. Ebenfalls beispielhaft sind für eine Flächentoleranz von k = 0,2 eine untere Begrenzungslinie 250 und eine obere Begrenzungslinie 260 eingezeichnet, zwischen denen der Flächeninhalt A gegenüber seinem jeweiligen Maximalwert höchstens um 20% reduziert ist. Wie sich leicht zeigen lässt, gilt für den Flächeninhalt A der Zusammenhang

$$A = \left( -\frac{\pi}{2} d^2 / \tan \frac{\alpha}{2} \right) + \pi (T - L) d$$

so dass der Flächeninhalt A maximal ist, wenn

$$d = (T - L) \tan \frac{\alpha}{2}$$

Es wird im Übrigen angenommen, dass die übertragbare Kraft zumindest bei Schraubverbindungen proportional zu dem Flächeninhalt der Kraftübertragungsfläche ist.

Das erfindungsgemäße Verfahren wurde anhand von Beispielen einer Vorrichtung zur Befestigung eines Bauelements an einem Basiselement sowie einem Verfahren für eine solche Befestigung beschrieben. Die Merkmale der beschriebenen Ausführungsformen sind innerhalb des durch die Patentansprüche bestimmten Verfahrens auch beliebig miteinander innerhalb einer einzigen Befestigungsvorrichtung beziehungsweise eines einzigen Herstellungsverfahrens kombinierbar. Es wird darauf hingewiesen, dass das erfindungsgemässe Verfahren auch für andere Zwecke geeignet ist.

**Patentansprüche**

1. Verfahren zur Befestigung eines Bauelements (190) an einem insbesondere aus Metall oder einer Legierung bestehenden Basiselement (100), bei dem in dem Basiselement (100) ein eine Tiefenrichtung (160) definierendes Sackloch (110) mit einer Kraftübertragungsfläche (220) des Flächeninhalts A erzeugt wird, welches in der Tiefenrichtung (160) eine Tiefe T mit T < 10 mm, insbesondere T < 8 mm, insbesondere T < 6 mm, insbesondere T < 4 mm, aufweist, wobei die Kraftübertragungsfläche (220) kegelstumpfförmig mit einem halben Kegelöffnungswinkel $\beta$ von 0° bis 20° und einem mittleren Durchmesser d ist, wobei das Sackloch (110) einen kegelförmigen Sacklochgrund (120) mit einem Kegelöffnungswinkel $\alpha$ von 88° bis 138° oder von 141°, insbesondere von 98° bis 138°, und an seinem Rand eine sich in Tiefenrichtung (160) bis zu einer Fasentiefe L von 0 mm bis 2 mm, insbesondere 0 mm bis 0,5 mm, erstreckende Fase (230) aufweist, wobei der mittlere Durchmesser d der Kraftübertragungsfläche (220) grösser oder gleich der Tiefe T ist und mindestens

$$d = \left(1 - \sqrt{k}\right)(T - L)\tan\frac{\alpha}{2}$$

und höchstens

$$d = \left(1 + \sqrt{k}\right)(T - L)\tan\frac{\alpha}{2}$$

mit einer maximalen Flächentoleranz k beträgt, wobei k = 0,3, insbesondere k = 0,2, insbesondere k = 0,1, wobei bei dem Verfahren ein Befestigungselement (130) über die Kraftübertragungsfläche (220) in dem Sackloch (110) verankert wird, und wobei das Bauelement (190) von dem Befestigungselement (130) gehalten wird.

2. Verfahren nach Anspruch 1, wobei das Sackloch (110) aus dem Sacklochgrund (120), der Kraftübertragungsfläche (220) und der Fase (230) besteht.

3. Verfahren nach einem der vorhergehenden Ansprüche, wobei das Befestigungselement (130) nur über die Kraftübertragungsfläche (220) in dem Sackloch (110) verankert wird.

4. Verfahren nach einem der vorhergehenden Ansprüche, wobei das Befestigungselement (130) ein insbesondere selbstschneidendes Aussengewinde (140) aufweist.

5. Verfahren nach einem der vorhergehenden Ansprüche, wobei die Kraftübertragungsfläche (220) ein insbesondere zu dem Aussengewinde (140 komplementäres Innengewinde aufweist.

6. Verfahren nach einem der vorhergehenden Ansprüche, wobei das Befestigungselement (130) in das Sackloch (110) gepresst, geklebt, geschweisst, gelötet und/oder geschraubt wird.

7. Verfahren nach einem der vorhergehenden Ansprüche, wobei ein Fasenwinkel zwischen der Fase (230) und der Tiefenrichtung (160) zwischen 30° und 60°, insbesondere zwischen 40° und 50°, insbesondere 45°, beträgt.

8. Verfahren nach einem der vorhergehenden Ansprüche, wobei ein Eintreibwinkel zwischen einer Oberfläche des Basiselements (100) und der Tiefenrichtung (160) mindestens 80°, insbesondere mindestens 85°, insbesondere 90°, beträgt.

9. Verfahren nach einem der vorhergehenden Ansprüche, wobei das Befestigungselement (130) aus Metall, einer Legierung oder einem Kunststoff besteht.

10. Verfahren nach einem der vorhergehenden Ansprüche, wobei das Sackloch (110) in das Basiselement (100) gebohrt wird.

11. Verfahren nach einem der vorhergehenden Ansprüche, wobei die Tiefe T mit Hilfe eines Anschlagbohrers vorbestimmt wird.

12. Verfahren nach einem der vorhergehenden Ansprüche, wobei die Tiefe T mit Hilfe eines Tiefenanschlags vorbestimmt wird.

13. Verfahren nach einem der vorhergehenden Ansprüche, wobei das Befestigungselement (130) einen Schaft (150) mit einer Gegenkraftübertragungsfläche und insbesondere einen Kopf (180) aufweist, und wobei die Gegenkraftübertragungsfläche mit der Kraftübertragungsfläche (220) wechselwirkt, um das Befestigungselement in dem Sackloch zu verankern.

14. Verfahren nach einem der vorhergehenden Ansprüche, wobei der mittlere Durchmesser d grösser oder gleich der Tiefe T ist.

## Claims

1. Method for fastening a component (190) to a base element (100) consisting in particular of metal or an alloy, in which a blind hole (110), defining a depth direction (160), with a force transfer surface (220) of surface area A is created in the base element (100), said blind hole having a depth T in the depth direction (160) where T < 10 mm, in particular T < 8 mm, in particular T < 6 mm, in particular T < 4 mm, wherein the force transfer surface (220) is frustoconical with a half cone opening angle β of 0° to 20° and a mean diameter d, wherein the blind hole (110) has a conical blind-hole bottom (120) with a cone opening angle α of 88° to 138° or of 141°, in particular of 98° to 138°, and has, at its edge, a chamfer (230) extending in the depth direction (160) to a chamfer depth L of 0 mm to 2 mm, in particular 0 mm to 0.5 mm, wherein the mean diameter d of the force transfer surface (220) is greater than or equal to the depth T and is at least

$$d = (1 - \sqrt{k})(T - L)\tan\frac{\alpha}{2}$$

and at most

$$d = (1 + \sqrt{k})(T - L)\tan\frac{\alpha}{2}$$

with a maximum surface tolerance k, wherein k = 0.3, in particular k = 0.2, in particular k = 0.1, wherein, in the method, a fastening element (130) is anchored in the blind hole (110) via the force transfer surface (220), and wherein the component (190) is held by the fastening element (130).

2. Method according to Claim 1, wherein the blind hole (10) consists of the blind-hole bottom (120), the force transfer surface (220) and the chamfer (230).

3. Method according to either of the preceding claims, wherein the fastening element (130) is anchored in the blind hole (110) only via the force transfer surface (220).

4. Method according to one of the preceding claims, wherein the fastening element (130) has an in particular self-tapping external thread (140).

5. Method according to one of the preceding claims, wherein the force transfer surface (220) has an internal thread that is complementary in particular to the external thread (140).

6. Method according to one of the preceding claims, wherein the fastening element (130) is pressed, adhesively bonded, welded, soldered and/or screwed into the blind hole (110).

7. Method according to one of the preceding claims, wherein a chamfer angle between the chamfer (230) and the depth direction (160) is between 30° and 60°, in particular between 40° and 50°, in particular 45°.

8. Method according to one of the preceding claims, wherein a drive-in angle between a surface of the base element (100) and the depth direction (160) is at least 80°, in particular at least 85°, in particular 90°.

9. Method according to one of the preceding claims, wherein the fastening element (130) consists of metal, an alloy or a plastic.

10. Method according to one of the preceding claims, wherein the blind hole (110) is drilled into the base element (100).

11. Method according to one of the preceding claims, wherein the depth T is predetermined with the aid of a stop drill.

12. Method according to one of the preceding claims, wherein the depth T is predetermined with the aid of a depth stop.

13. Method according to one of the preceding claims, wherein the fastening element (130) has a shank (150) with a mating force transfer surface and in particular a head (180), and wherein the mating force transfer surface interacts with the force transfer surface (220) in order to anchor the fastening element in the blind hole.

14. Method according to one of the preceding claims, wherein the mean diameter d is greater than or equal to the depth T.

## Revendications

1. Procédé de fixation d'un composant (190) à un élément de base (100) notamment constitué de métal ou d'un alliage, selon lequel un trou borgne (110) définissant une direction de profondeur (160), muni d'une surface de transfert de force (220) de l'aire A, est réalisé dans l'élément de base (100), qui présente une profondeur T dans la direction de la profondeur (160) avec T < 10 mm, notamment T < 8 mm, notamment T < 6 mm, notamment T < 4 mm, dans lequel la surface de transfert de force (220) est de forme tronconique avec un demi-angle d'ouverture de cône β de 0° à 20° et un diamètre moyen d, dans lequel le trou borgne (110) comprend un fond de trou borgne de forme conique (120) avec un angle d'ouverture de cône α de 88° à 138° ou de 141°, notamment de 98° à 138°, et, au niveau de son bord, un chanfrein (230) s'étendant dans la direction de la profondeur (160) jusqu'à une profondeur de chanfrein L de 0 mm à 2 mm, notamment de 0 mm à 0,5 mm, dans lequel le diamètre moyen d de la surface de transfert de force (220) est supérieur ou égal à la profondeur T et d'au moins

$$d = \left(1 - \sqrt{k}\right)(T - L)\tan\frac{\alpha}{2}$$

et d'au plus

$$d = \left(1 + \sqrt{k}\right)(T - L)\tan\frac{\alpha}{2}$$

avec une tolérance de surface maximale k, dans lequel k = 0,3, notamment k = 0,2, notamment k = 0,1, dans lequel, selon le procédé, un élément de fixation (130) est ancré dans le trou borgne (110) par le biais de la surface de transfert de force (220), et dans lequel le composant (190) est maintenu par l'élément de fixation (130).

2. Procédé selon la revendication 1, dans lequel le trou borgne (110) est constitué par le fond de trou borgne (120), la surface de transfert de force (220) et le chanfrein (230).

3. Procédé selon l'une quelconque des revendications précédentes, dans lequel l'élément de fixation (130) n'est ancré dans le trou borgne (110) que par le biais de la surface de transfert de force (220).

4. Procédé selon l'une quelconque des revendications précédentes, dans lequel l'élément de fixation (130) comprend un filetage extérieur (140) notamment autotaraudant.

5. Procédé selon l'une quelconque des revendications précédentes, dans lequel la surface de transfert de force (220) comprend un filetage intérieur notamment complémentaire du filetage extérieur (140).

6. Procédé selon l'une quelconque des revendications précédentes, dans lequel l'élément de fixation (130) est pressé, collé, soudé, brasé et/ou vissé dans le trou borgne (110).

7. Procédé selon l'une quelconque des revendications précédentes, dans lequel un angle de chanfrein entre le chanfrein (230) et la direction de profondeur (160) est compris entre 30° et 60°, notamment entre 40° et 50°, notamment est de 45°.

8. Procédé selon l'une quelconque des revendications précédentes, dans lequel un angle d'enfoncement entre une surface de l'élément de base (100) et la direction de profondeur (160) est d'au moins 80°, notamment d'au moins 85°, notamment de 90°.

9. Procédé selon l'une quelconque des revendications précédentes, dans lequel l'élément de fixation (130) est constitué de métal, d'un alliage ou d'une matière plastique.

10. Procédé selon l'une quelconque des revendications précédentes, dans lequel le trou borgne (110) est percé dans l'élément de base (100).

11. Procédé selon l'une quelconque des revendications précédentes, dans lequel la profondeur T est prédéterminée à l'aide d'une perceuse à butée.

12. Procédé selon l'une quelconque des revendications précédentes, dans lequel la profondeur T est prédéterminée à l'aide d'une butée de profondeur.

13. Procédé selon l'une quelconque des revendications précédentes, dans lequel l'élément de fixation (130) comprend une tige (150) munie d'une surface de transfert de contre-force et notamment d'une tête (180), et dans lequel la surface de transfert de contre-force interagit avec la surface de transfert de force (220) pour ancrer l'élément de fixation dans le trou borgne.

14. Procédé selon l'une quelconque des revendications précédentes, dans lequel le diamètre moyen d est supérieur ou égal à la profondeur T.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19842173 A1